# EUROPÄISCHE PATENTSCHRIFT

(11) **EP 0 587 817 B1**
(45) Veröffentlichungstag und Bekanntmachung des Hinweises auf die Patenterteilung: **22.03.1995**
(21) Anmeldenummer: 92917432.4
(22) Anmeldetag: 09.06.1992
(51) Int. Cl.: B41J 3/46, B41J 3/32, B41J 5/28, G05G 1/02, G09B 13/04, G06F 3/023

(54) **TASTATUR**
KEYBOARD
CLAVIER

(30) Priorität: 06.06.1991 AT 1148/91
(43) Veröffentlichungstag der Anmeldung: 23.03.1994
(73) Patentinhaber: CARETEC GmbH, A-1010 Wien (AT)
(72) Erfinder: LITSCHEL, Dietmar, A-3400 Klosterneuburg (AT)
(74) Vertreter: Babeluk, Michael, Dipl.-Ing. Mag., Patentanwälte Babeluk - Krause
(86) Internationale Anmeldenummer: AT9200073
(87) Internationale Veröffentlichungsnummer: WO9221519

(56) Entgegenhaltungen:
- DE-A-12 916 790
- DE-C-23 108 028
- US-A-03 969 595
- US-A-04 042 777
- US-A-04 849 732

## Beschreibung

Die Erfindung betrifft eine Tastatur mit mindestens einer Taste und einer Auslöseeinheit, die mit der Taste verbunden ist. Von den bekannten Tastaturen ist insbesondere die der Schreibmaschine hervorzuheben. Gemäß Anordnung der Buchstaben auf der linken oberen Buchstabenreihe wird diese QWERTZ-Tastatur, im englischen Sprachraum QWERTY-Keyboard, in der Computersprache ASCII-Tastatur (in Folge entweder QWERTZ- oder ASCII-Tastatur) genannt. Besonders vorteilhaft ist das Eingeben (Eintippen oder Anschlagen) nach dem Zehnfingersystem, das vom geübten Schreiber auch ohne Augenkontakt zu den Tasten ausgeführt werden kann. Vorteilhaft ist auch, daß es sich um eine weltweit standardisierte Tastatur handelt, die kostengünstig zuganglich ist. Der Nachteil der QWERTZ-Tastatur ist, daß sie relativ voluminös ist und eine feste Auflagefläche benötigt. Außerdem ist ihr Einsatz mit einer relativ hohen physischen Beanspruchung verbunden. Sie gilt inzwischen als soweit ausgereift, daß sich ihre Effizienz nur mehr geringfügig erhöhen läßt.

Aus der DE-C 3 108 028 ist eine Tastatur mit einer Taste bekannt, die zwei Schalter besitzt, die beim Betätigen der Taste nacheinander geschlossen werden. Damit ist eine Anzeige der Funktion der Taste möglich. Es ist jedoch mit einer solchen Taste nur möglich, eine einzige Funktion auszuführen.

Weiters sind Tastaturen bekannt, bei denen für jeden Anschlag zwei sequentielle Schritte erforderlich sind: Zunächst muß der auf der jeweiligen Taste befindliche Sensor vom Finger berührt werden. Die eigentliche Eingabe erfolgt sodann durch Daumendruck auf einer zentralen Eingabetaste. Nachteilig ist außerdem, daß zum Erreichen des Sensors auch seitliche Bewegungen der Finger erforderlich sind, wofür keine günstigen natürlichen Veranlagungen vorhanden sind.

Auch mit der in der US-A 4 042 777 beschriebenen Einhandtastatur ist der Akkordanschlag möglich, wobei der Zeige-, Mittel- und Ringfinger zum Einsatz gelangen. Auf zwei vollen und zwei halben Tastenreihen werden drei Buchstabenreihen mit dem gesamten Alphabet dargestellt. Während die obere und untere Reihe, vom Schreibenden aus gesehen, neun Buchstaben aufweisen, hat die mittlere acht. Mit der Tastatur werden die Tastenabstände der ungekürzten Tastatur in den Reihen sehr stark komprimiert, um die Tastatur auch mit einer Hand bedienen zu können. Zehn Tasten bestehen aus einer eigenen Einheit, dreizehn aus je zwei Tastenhälften und drei aus vier Tastenvierteln. Nachteilig ist, daß die Anzahl der von einem Finger auszuführenden Anschläge sehr hoch ist und die Finger häufig gespreizt und seitwärts bewegt werden müssen. Eine Reduktion der Anzahl der Tasten auf der Tastaturoberfläche ist nicht vorgesehen.

Aus der US-A 4 849 732 ist eine Tastatur bekannt, bei der für jeden Finger eine Multifunktionstaste vorgesehen ist. Je nach Ort des Anschlages können dabei unterschiedliche Zeichen erzeugt werden. Nachteilig bei einer solchen bekannten Vorrichtung ist jedoch, daß erst nach dem Anschlag eine mögliche Fehlbedienung erkannt werden kann. Wenn beispielsweise eine solche Tastatur als Computereingabevorrichtung vorgesehen ist, so kann der Benützer erst bei Erscheinen des falschen Zeichens am Bildschirm die Fehleingabe erkennen, und er muß diese in aufwendiger Weise rückgängig machen.

Aufgabe der vorliegenden Erfindung ist es, diese Nachteile zu vermeiden und eine Tastatur zu schaffen, bei der mehrfach betätigbare Tasten vorgesehen sind und bei der die Richtigkeit einer beabsichtigten Eingabe vor der endgültigen Durchführung dieser Eingabe erkennbar ist. Insbesonders soll es möglich sein, vor der endgültigen Betätigung der Taste feststellen zu können, welche der mehreren Funktionen ausgewählt ist.

Wesentlich dabei ist auch, daß der Benutzer für diese Kontrolle nicht auf die Beobachtung der Finger angewiesen sein soll.

Diese Aufgabe wird dadurch gelöst, daß auf der Taste mindestens zwei Sensoren vorgesehen sind, um mit der Taste unterschiedliche Signale erzeugen zu können, wobei die Sensoren mit einer Anzeigevorrichtung für die zu erzeugenden Signale versehen sind und wobei das Ansprechverhalten der Sensoren unterschiedlich zu dem der Auslöseeinheit ist, um vor dem endgültigen Auslösen des Signales eine Anzeige des Signales bewirken zu können. Dabei sind so viele Sensoren vorgesehen, wie unterschiedliche Zeichen mit der Taste erzeugbar sind. Für den Benutzer ist es zunächst möglich, einen der Sensoren anzusprechen und damit eine vorläufige Anzeige des betreffenden Signales bzw. Zeichens zu erhalten. Ist dieses Zeichen das beabsichtigte, so kann durch Betätigung der Auslöseeinheit die tatsächliche Eingabe dieses Zeichens erreicht werden. Im einfachsten Fall geschieht dies dadurch, daß der Druckpunkt der Sensoren und der Auslöseeinheit unterschiedlich ist. Eine leichte Berührung eines Sensors löst damit zunächst nur die vorläufige Anzeige aus, die dann durch einen stärkeren Druck des Fingers in eine endgültige Eingabe umgesetzt werden kann. Die Anzeige kann dabei akustisch oder optisch erfolgen.

Es ist jedoch auch möglich, mit den Sensoren andere Anschlagskonzepte durchzuführen. So ist es beispielsweise denkbar, daß die Sensoren auf Fingerdruck reagieren, wogegen die Auslöseeinheit erst beim Entfernen des Fingers von der Taste ausgelöst wird. Für den Benutzer ist es dabei möglich, auf der Taste das richtige Zeichen aufzusuchen und nach dem Auffinden des entsprechenden Sensors für diese Zeichen durch Abheben des Fingers die Eingabe eben dieses Zeichen zu bewirken.

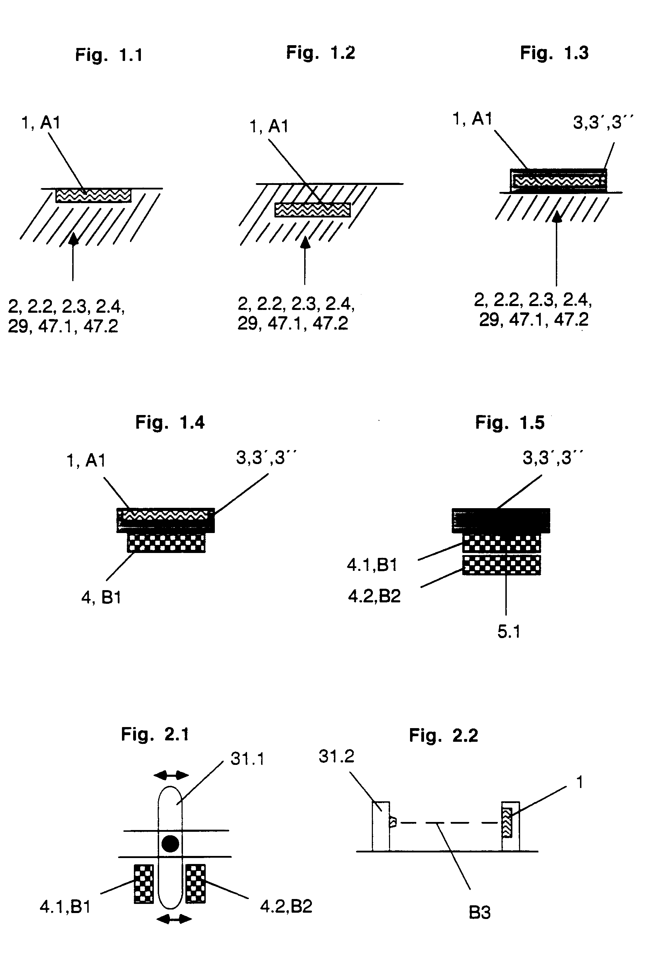

Die Erfindung wird anhand von in den Figuren dargestellten Ausführungsbeispielen näher erläutert. Fig. 1.1 bis Fig. 1.5 zeigen schematisch möglich Anordnungen des Sensors 1 in der Tastatur 2. Weitere Tastaturen 2 sind die Akkordtastatur 2.2, die Beidhand-Relieftastatur 2.3, die Einhand-Relieftastatur 2.4, die Daumentastatur 29, die Einhand-Brailletastatur für Linkshänder 47.1 und die Einhand-Brailtastatur für Rechtshänder 47.2. Der Sensor 1 kann ein Wärme-, Berührungs-, Druck-, Feuchtigkeits-, Magnet-, Optik- oder andere Sensor sein und eine unterschiedliche Ausführung, Größe und Leistungsfähigkeit besitzen und an beliebiger Stelle der Tastatur 2, so auch im Gehäuse 31 und der Taste 3 angebracht sein. Taste 3 ist eine einfache Taste in beliebiger Ausführung als Überbegriff, der alle anderen einfachen Tasten inkludiert. Taste 3' ist eine Zeichentaste. Mit der Zeichentaste 3' werden Zeichen, wie beispielsweise Buchstaben, Braillepunkte und Zählen wie auch Silben und Wörter aktiviert bzw. angeschlagen. Taste 3'' ist eine Funktionstaste, Funktionstasten 3'' sind Tasten, die der Steuerung und dem effizienten Einsatz der Tastatur 2 dienen, wie beispielsweise die Umschalttaste oder die Tabulatortaste. Eine Taste 3 kann mehrere, auch unabhängig voneinander funktionierende Sensoren 1 aufweisen.

Fig. 1.4 zeigt eine erfindungsgemäße Taste 3, die neben einem Sensor 1 auch eine Auslöseeinheit 4 aufweist. Der Sensor 1 und die Auslöseeinheiten 4 werden durch unterschiedlich starken Druck d, durch unterschiedlich lange Verweildauer v wie auch durch die unterschiedliche Richtung r und Geschwindigkeit g über den Sensor 1 streifenden oder berührungslos gleitenden Finger, Hände, andere Körperteile oder Objekte aktiviert. Die aktivierten Auslöseeinheiten 4 lösen dann einen Anschlag aus, wenn die ihnen (vorgegebenen) Anforderungen erfüllt werden. Derartige Anforderungen können im einzelnen sein, daß der auf sie ausgeübte direkte oder indirekte Druck erreicht, über-oder unterschritten wird, daß der ausgeübte Druck eine bestimmte (Verweil-) Dauer erreicht, über- oder unterschreitet, daß die über die jeweilige Auslöseeinheit gleitenden oder streichenden Finger eine bestimmte Richtung verfolgen oder nicht verfolgen oder diese Bewegungen eine bestimmte Geschwindigkeit erreichen, über- oder unterschreiten. Eine derartige Anforderung kann auch darin bestehen, daß der Anschlag einer Auslöseeinheit 4 erst dann ausgeführt wird, wenn gleichzeitig oder zusätzlich eine oder beliebig viele andere Auslöseeinheiten aktiviert oder angeschlagen werden. Werden die vorgegebenen Anforderungen nicht erfüllt, so unterbleibt der Anschlag. Mit dem Anschlag werden entweder Zeichen (einzelne Buchstaben, Zeichen usw.) geschrieben, Töne erzeugt oder Befehle ausgeführt. Ist die Aktivierung oder der Anschlag einer Auslöseeinheit 4 keinem währnehmbaren Geräusch verbunden, so kann ein (Signal-) Ton, eine Sprachausgabe oder eine beliebige andere Rückmeldung an den Anwender EDV-unterstützt erzeugt werden, was insbesondere beim Einsatz von Tastaturen für Behinderte von Belang ist.

Fig. 1.5 zeigt eine Taste 3 mit unmittelbar übereinander angeordneten Sensor 1 und Auslöseeinheiten 4. Beim Betätigen der Taste 3 erfolgt der erste Anschlag nach Erfüllen der Anforderungen B1 der Tasteneinheit 4.1 und im Anschluß daran, nach Erfüllen der Anforderungen B2, der Anschlag der Tasteneinheit 4.2. Sind zwei (wie bei Fig. 1.5) oder mehrere derartige Auslöseeinheiten 4 vorhanden, so erlangt nur der letzte ausgeführte Anschlag Gültigkeit, während die vorangegangenen Anschläge automatisch gelöscht werden. Eine Taste 3 bildet gemeinsam mit Sensor 1 und Auslöseeinheiten 4 die Tasteneinheit 5.1.

Fig. 2.1 zeigt beliebige (andere) Vorrichtungen 31 (Schieber, Druckknöpfe usw.) zum Aktivieren oder Auslösen eines Vorgangs mit den Fingern, Händen, Körperteilen oder Objekten. Fig. 2.2 zeigt einen Lichtschranken 31.1. Beim Unterbrechen des Lichtes B3 des Lichtschrankens 31.1 wird der Sensor 1 aktiviert. Fig. 2.1 zeigt einen Hebel 31.1, der beim Betätigen nach rechts dem Sensor 1, beim Betätigen nach links die Auslöseeinheit 4 aktiviert.

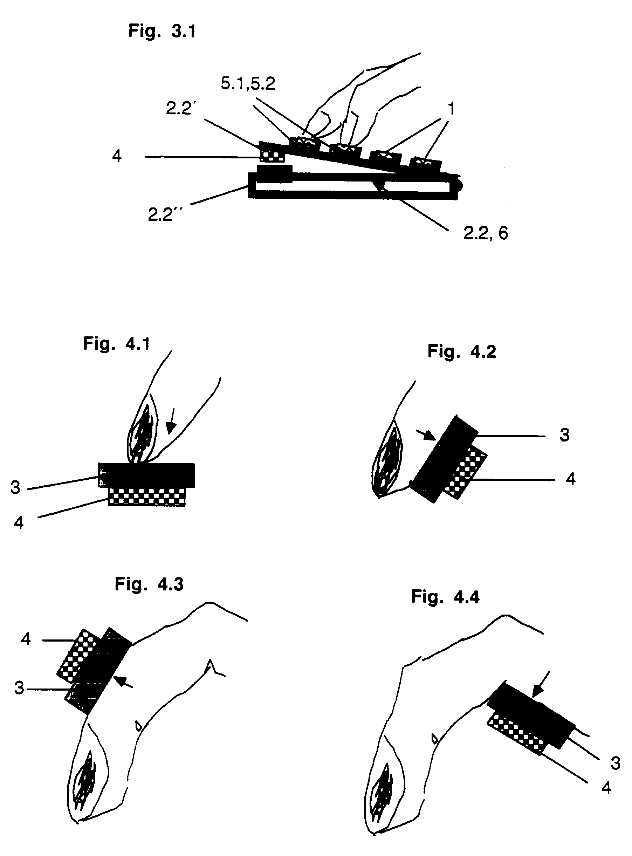

Fig. 3.1 zeigt die Akkordtastatur 2.2 auf der mit einem einzigen Akkordanschlag mehrere Zeichen (z.B. Silben, Kürzel, Wörter), angeschlagen werden können. Sie hat einen beliebigen Aufbau, mit beispielsweise einem beweglichen oberen Teil 2.2' und einem unbeweglichen unteren Teil 2.2''. Der obere Teil 2.2' wird im Zuge des Akkordanschlags auf den unteren Teil 2.2'' gedrückt. Auf dem oberen Teil 2.2' befinden sich die Tasteneinheiten 5.1, 5.2, die zumindest einen Sensor 1 aufweisen müssen. Außerdem weist die Akkordtastatur 2.2 eine zentrale Auslöseseinheit 4 (gegebenenfalls auch mehrere derartige Einheiten; vgl. Fig. 1.5) auf. Das Funktionsprinzip der Akkordtastatur 2.2 kann, unter Einsatz eines Anschlagskonzeptes 6 variabel gestaltet werden. So können die zu erfüllenden Anforderungen der Tasteneinheiten 5.1, 5.2 und die zentrale Auslöseeinheit 4 aufeinander abgestimmt sein oder unabhängig wirken, sodaß die Tastatur 2.2 beispielsweise für Akkordanschläge und Nicht-Akkordanschläge eingesetzt werden kann; bei letzterem stehen ausschließlich die Tasteneinheiten 5.1, 5.2 im Einsatz. Beim vorgesehenen Akkordanschlag werden zunächst die Einzelzeichen, die Teil der Akkordinformation sind, durch Betätigen (Aktivieren, Anschlagen) der Tasteneinheiten 5.1, 5.2 gesammelt und, in Fortsetzung des Tastendrucks (quasi-simultan mit den Anschlägen auf den Tasteneinheiten 5.1, 5.2), als Akkordanschlag auf der zentralen Auslöseeinheit 4 in einem einzigen Gesamtanschlag angeschlagen. Auf diese Weise ist es möglich, den Akkordanschlag auch beim Drücken, anstelle beim Abheben der Finger, anzuführen.

Fig. 4.1 bis Fig. 4.4 zeigen beispielhaft wie die Tasten 3 mit verschiedenen Gliedern der Finger gedrückt und die Auslöseeinheiten 4 auf diese Weise angeschlagenen werden. Fig. 4.1 zeigt den üblichen, mit den Fingerspitzen ausgeübten Anschlag (den "Tippanschlag"), während der Anschlag bei Fig. 4.2 mit der Fingerkuppe des vorderen Fingergliedes erfolgt. Weitere (hier nicht aufgezeigte) Positionen für Schaltelemente 4 und Sensoren 1 können sich entlang der gesamten Hand, insbesondere auch unterhalb des Handballens, wie auch entlang des Unter- und Oberarmes befinden, was insbesondere bei Spezialtastaturen für Behinderte von Bedeutung ist. In Abhängigkeit von der jeweiligen Art und Intensität der Behinderung sind auch noch weitere technische Vorkehrungen möglich. Auslöseeinheiten, die beispielsweise mit den Bewegungen des Mundes, der Zunge, der Augen oder aber mit dem Atem des Anwenders der Tastatur aktiviert werden können.

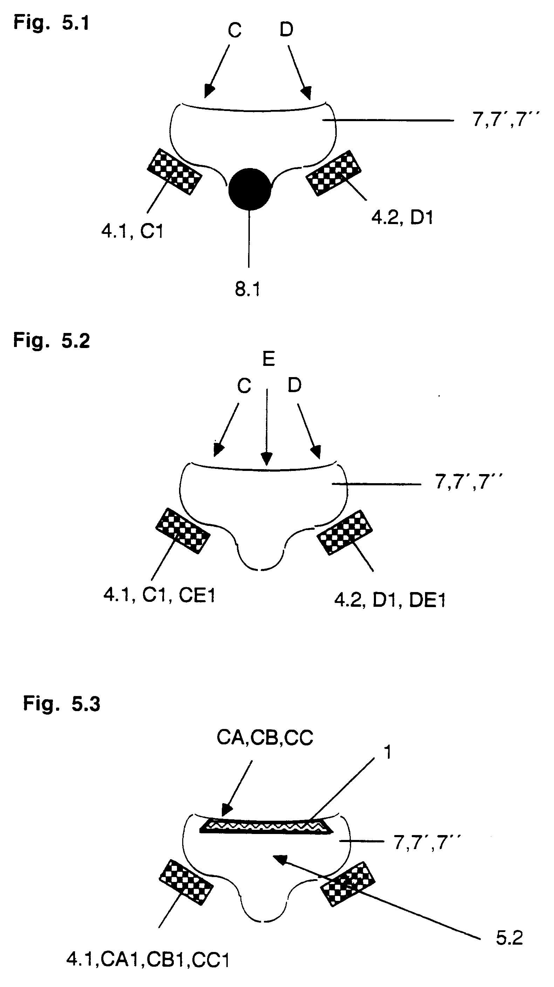

Fig. 5 zeigt beispielhaft eine Mehrwegtaste 7 in beliebiger Ausführung. Taste 7' ist eine Mehrwegtaste 7, mit der Zeichen aktiviert bzw. angeschlagen werden (vgl. 3'). Taste 7'' ist eine Mehrwegtaste 7, als Funktionstaste (vgl. 3''). Die Mehrwegtaste kann an zwei oder mehreren Stellen gedrückt werden. In Abhängigkeit von der Position des Tastendruckes, erfolgen unterschiedliche Aktivierungen und somit Anschläge. Taste 7 der Fig. 5.1 weist eine starre Verankerung 8.1 und zwei Auslöseeinheiten 4.1, 4.2 auf. Bei Druck Cd kippt die verankerte Mehrwegtaste 7 nach links und schlägt die Auslöseeinheit 4.1, nach Erfüllen der vorgegebenen Anforderungen C1d an; bei Druck Dd kippt die verankerte Mehrwegtaste 7 nach rechts und schlägt die Auslöseeinheit 4.2 an. Es können mit zwei Auslöseeinheiten 4.1, 4.2 drei Anschläge ausgeübt werden, da bei Druck Ed und gleichzeitigem Erfüllen der vorgegebenen Anforderungen an den Auslöseeinheiten 4.1 und 4.2 ein eigenständiger (zusätzlicher) Anschlag zustande kommt. Fig. 5 zeigt wie durch eine Kombination der Funktionen der Mehrwegtaste 7 und der Sensors 1 eine Vervielfachung der Anschlagsmöglichkeiten erreicht wird. Handelt es sich beim der Sensor 1 beispielsweise um einen Drucksensor, der mit drei verschiedenen Druckintensitäten C (d1, d2, d3) gedrückt werden kann, so können gleichermaßen viele Aktivierungen und somit Anschläge, nach Erfüllen der Anforderungen C1 (d1, d2, d3) der Auslöseeinheit 4.1, ausgeführt werden. Eine Mehrwegtaste 7 bildet mit ihren Auslöseeinheiten 4 die Tasteneinheit 5.2.

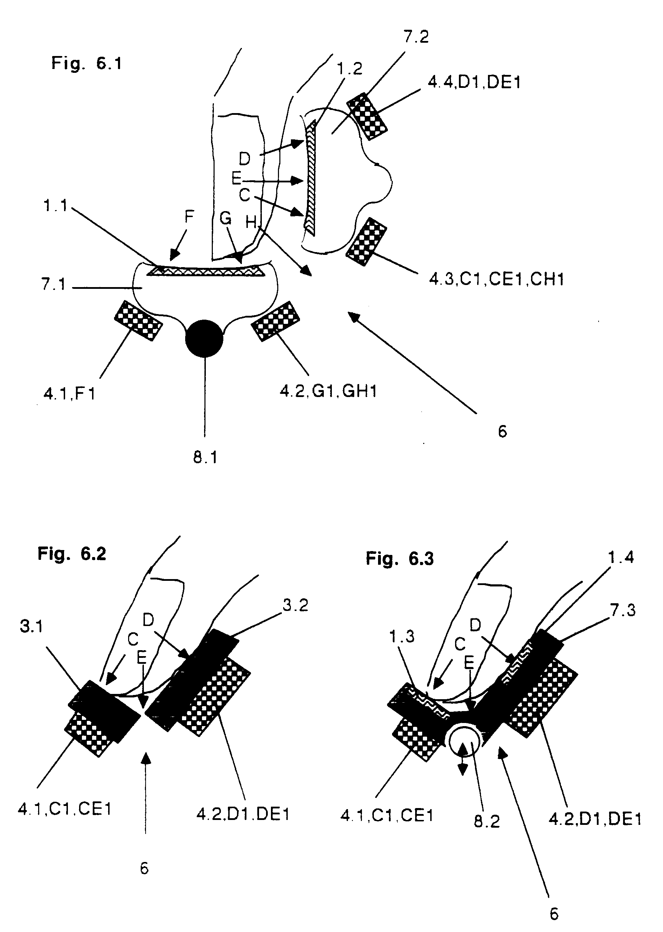

Fig. 6.1 bis Fig. 6.3 zeigen beispielhaft das Zusammenspiel zweier Tasten zur Realisierung eines bestimmten Anschlagskonzeptes 6, das verschiedenartige Gestaltungsmöglichkeiten erlaubt. Gemäß Fig. 6.1 verfügt die Mehrwegtaste 7.1 über einen Sensor 1.1 und eine starre Verankerung 8.1. Durch Druck Fd kann mit ihr, nach Erfüllen der vorgegebenen Anforderung F1d, die Auslöseeinheit 4.1, durch Druck Gd, nach Erfüllen der vorgegebenen Anforderung G1d, die Auslöseeinheit 4.2 angeschlagen werden. Die Mehrwegtaste 7.2 verfügt ebenfalls über einen Sensor 1.2, weist jedoch, zum Unterschied von 7.1, keine starre Verankerung auf. Durch Druck Cd kann, nach Erfüllen der vorgegebenen Anforderung C1d, die Auslöseeinheit 4.3, durch Druck Dd, nach Erfüllen der vorgegebenen Anforderung D1d, die Auslöseeinheit 4.4 und durch Druck Ed, nach Erfüllen der vorgegebenen Anforderungen CE1d und DE1d ein eigenständiger (zusätzlicher) Anschlag, ohne Vorhandensein einer eigenen Auslöseeinheit, ausgeführt werden. Durch Druck Hd, der auf beide Mehrzwecktasten 7.1 und 7.2 gerichtet ist, wird, nach Erfüllen der vorgegebenen Anforderungen GH1d und CH1d ebenfalls ein zusätzlicher Anschlag, ohne Vorhandensein einer eigenen Auslöseeinheit, erreicht. Das Konzept ist so ausgelegt, daß eine versehentlich mitgedrückte Taste auomatisch korrigiert bzw. ignoriert wird. So wird beispielsweise ein Druck auch dann als Druck Hd interpretiert, wenn neben den Drücken Gd und Cd auch noch die Drücke Dd und Ed angewandt wurden. Die Drücke Dd und Ed werden in diesem Falle ignoriert.

Die Auslöseeinheiten 1.1 und 1.2 dienen zur Verstärkung der Eindeutigkeit des Tastendrucks durch Feststellen der Richtung r der Fingerbewegungen. Durch derartige Vorkehrungen wird eine geringere Präzision des Anschlags abverlangt, als jene, die erforderlich wäre, wenn die Tasten ausschließlich an den ihnen zugeordneten Auslöseeinheiten gedrückt werden müßten. Fig. 6.2 zeigt ein weiteres Beispiel des Zusammenspiels zweier Tasten 3.1,3.2. Durch Druck Cd wird, nach Erfüllen der vorgegebenen Anforderung C1d, die Auslöseeinheit 4.1 und durch Druck Dd, nach Erfüllen der vorgegebenen Anforderungen D1d, die Auslöseeinheit 4.2 angeschlagen. Durch Druck Ed wird, nach Erfüllen der vorgegebenen Anforderungen CE1d und DE1d ein zusätzlicher Anschlag erreicht. Fig. 6.3 zeigt dasselbe Prinzip wie Fig. 6.2, doch gelangt bei ihr eine Mehrwegtaste 7.3 mit den Sensoren 1.3 und 1.4 zum Einsatz. Sie besitzt: eine bewegliche (z.B gefederte) Verankerung 8.2, der eine Kipp- und Unterstützungsfünktion zur Erhöhung der Eindeutigkeit der Anschläge zukommt. Die Auslöseeinheiten 1.3, 1.4 dienen ebenfalls zur Erhöhung der Eindeutigkeit des Tastendrucks (vgl. Fig. 6.1). Ein besonderer Vorteil der Ausführungen Fig. 6.1 bis 6.3 besteht darin, daß sich die Finger in unmittelbarer Nähe der Tasten 3.1, 3.2, 7.1, 7.2, 7.3 befinden, sodaß die Anschläge mit geringen Bewegungen der Finger ausführen lassen.

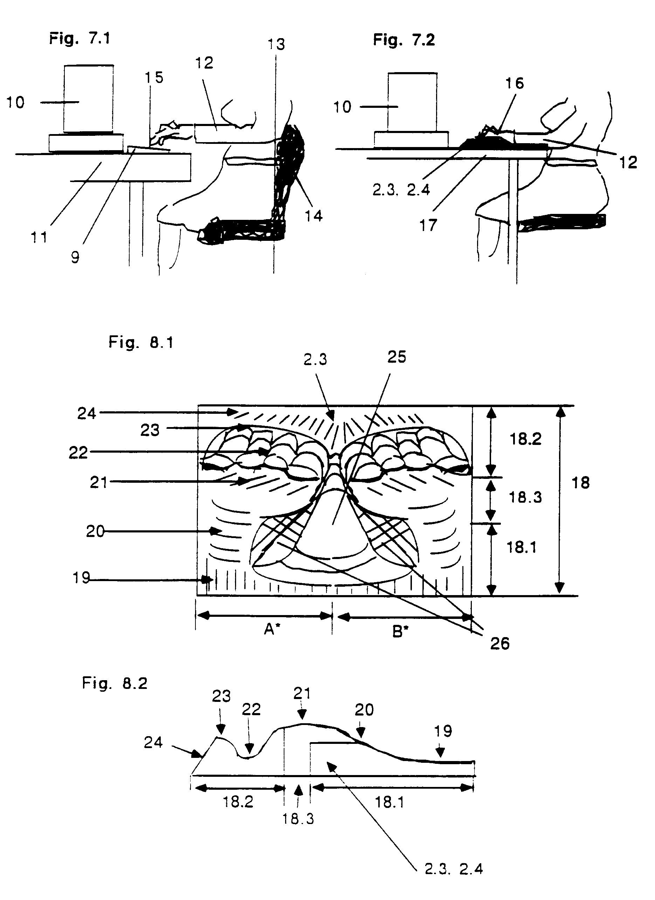

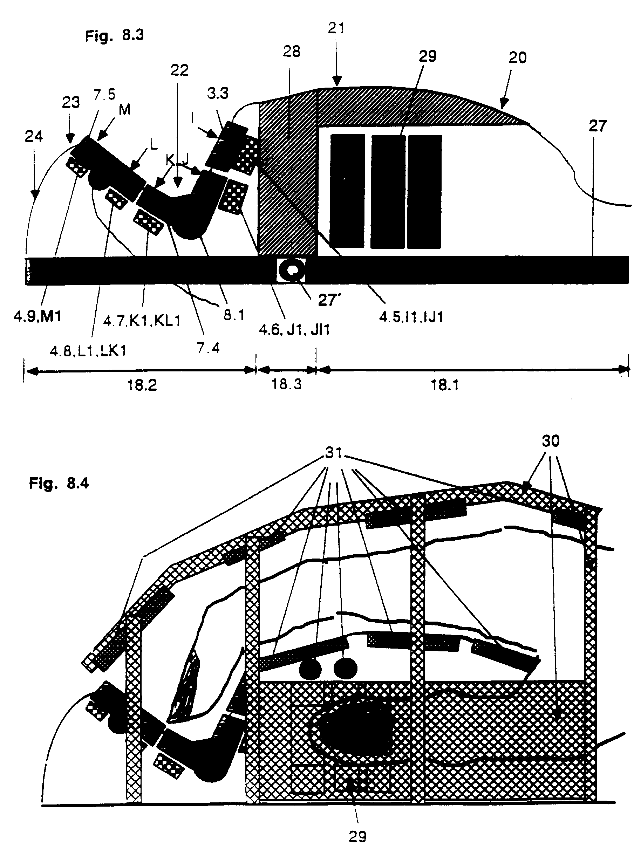

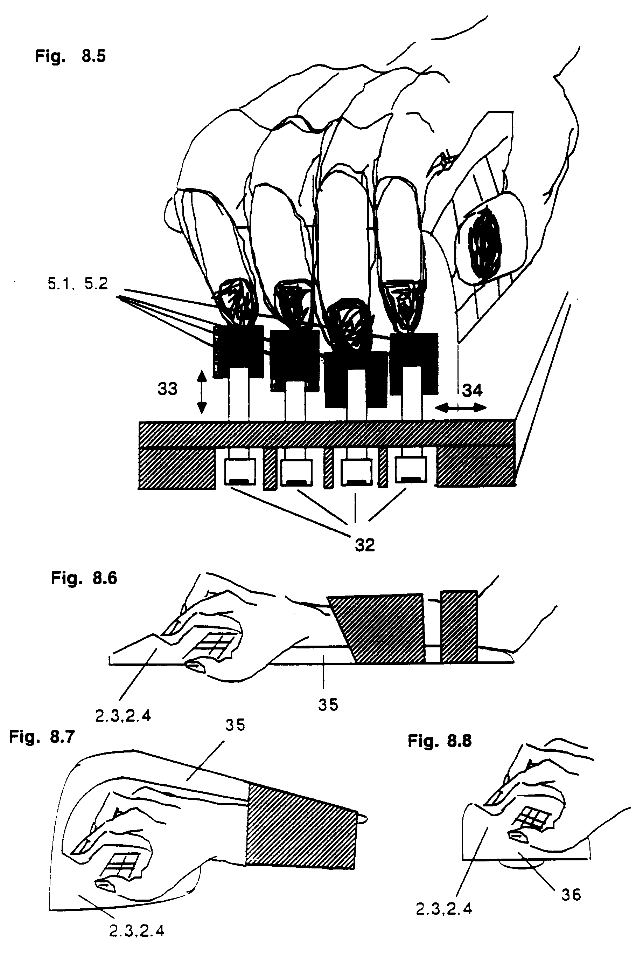

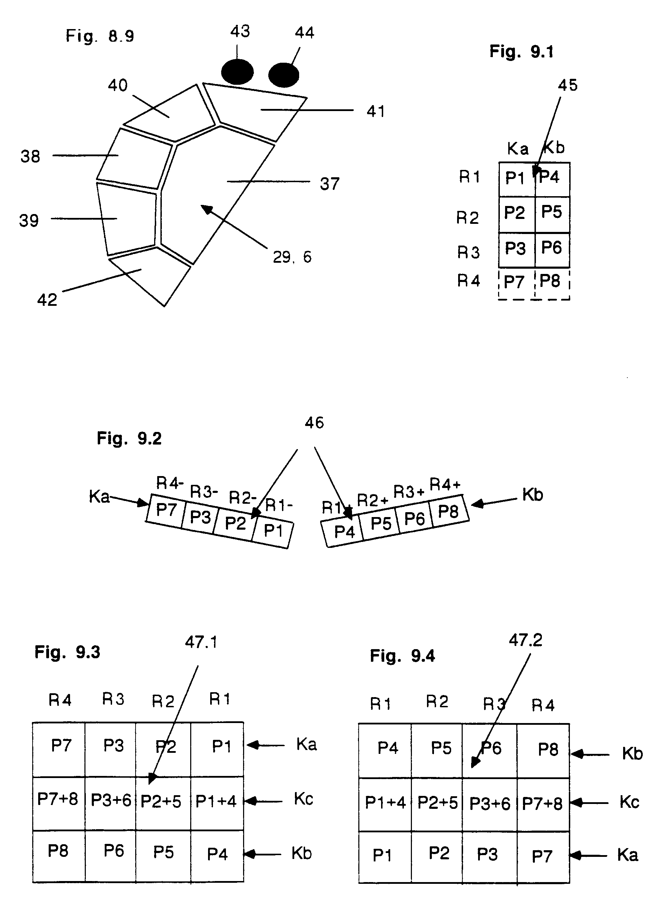

Fig. 7.1 zeigt den Einsatz einer QWERTZ-Tastatur 9 im Einsatz mit einem Bildschirm 10. Dafür ist in der Regel ein spezieller Schreibtisch 11 erforderlich, der niedriger als ein normaler Tisch ist, damit die Unterarme 12 des Schreibers waagrecht gehalten werden können. Um eine aufrechte Schreibhaltung 13 zu erreichen, ist überdies ein bequemer Sessel mit Rückenlehne 14 erforderlich. Die Grundstellung der Finger befindet sich beim Zehnfingersystem in der mittleren Tastenreihe 15 der Tastatur 9. Fig. 7.2 zeigt den Einsatz der erfindungsgemäßen Relieftaststaturen 2.3, 2.4, in die die Hand 16 des Schreibers eingebettet ist (vgl. Fig. 8.1 bis Fig. 8.8). Die Relieftastaturen 2.3, 2.4 liegen auf einem gewöhnlichen Schreibtisch 17 auf, sodaß der Unterarm 12 eine bequeme Schreibhaltung einnimmt. Durch die Möglichkeit, die Arme beim Schreiben aufstützen zu können, ist keine besondere Sitzgelegenheit erforderlich.

Fig. 8.1 bis Fig. 8.8 zeigen diverse Details der Beidhand-Relieftastatur 2.3 und der Einhand-Relieftastatur 2.4. Fig. 8.1 zeigt die Beidhand-Relieftastatur 2.3 von oben. Aus ihr geht u.a. hervor, daß sie in die beiden Hälften A* und B* geteilt ist. Fig. 8.2 zeigt einen Schnitt durch die beiden Relieftastaturen 2.3, 2.4, die über einen vorderen Teil 18.1, einen hinteren Teil 18.2 und einen Zwischenteil 18.3 verfügen. Im vorderen Teil 18.1 sind sie zunächst relativ niedrig 19, steigen jedoch mit zunehmender Distanz vom Anwender allmählich an 20, um sich nach dem ersten Scheitelpunkt 21 in eine Mulde 22, in der sich die Tasten befinden, abzusenken. Am tiefsten Punkt der Mulde 22 befindet sich die Grundstellung der Finger. Von der Grundstellung aus steigen die Relieftastaturen 2.3, 2.4 zu einem weiteren Scheitelpunkt 23 (wiederum) an, um von diesem bis zum hinteren Ende 24 abzufallen. In der Mitte der Relieftastatur 2.3 befindet sich eine Ausnehmung 25 für die Daumen. An den seitlichen Begrenzungen 26 der Ausnehmung 25 befinden sich Daumentasten 29 (hier nur andeutungsweise dargestellt; vgl. Fig. 8.3 und Fig 8.4).

Fig. 8.3 zeigt eine vergrößerte und detailliertere Darstellung der Relieftastaturen 2.3, 2.4 gemäß Fig. 8.2. Das Beispiel läßt die in der Mulde 22 befindlichen Tasten 3.3, 7.4, 7.5 erkennen. Den Tasten 3.3, 7.4, 7.5, die auch Sensoren 1 aufweisen (hier nicht angeführt), sind den Auslöseeinheiten 4.5, 4.6, 4.7, 4.8, 4.9 zugeordnet. Das im Beispiel verfolgte Anschlagkonzept 6 sieht vor, daß beim Druck 1d, nach Erfüllen der vorgegebenen Anforderungen l1d, die Auslöseeinheit 4.5 angeschlagen wird. Gleichermaßen werden beim Druck Jd, Kd, Ld und Md die Auslöseeinheiten 4.6, 4.7, 4.8 und 4.9 beim Erfüllen der vorgegebenen Anforderungen J1d, K1d, L1d und M1d, angeschlagen. Wird sowohl Druck ld als auch Druck Jd ausgeübt, und dabei den vorgegebenen Anforderungen lJ1d und Jl1d entsprochen, so wird jedoch lediglich die Auslöseeinheit 4.6 angeschlagen. Druck lJ1d wird somit ignoriert. Dermaßen ist es auch möglich, beim gleichzeitigen Druck von Kd und Ld, und Erfüllen der vorgegebenen Anforderungen KL1d und LK1d den Anschlag lediglich einer einzelnen der beiden Auslöseeinheiten 4.7, 4.8 zuzuordnen, wie es auch möglich ist, aus diesen beiden Drücken konzeptmäßig einen ergänzenden (zusätzlichen) Anschlag dafür vorzusehen (im gegenständlichen Beispiel nicht vorgesehen). Die Daumentasten 29 befinden sich bei der Beidhand-Relieftastatur 2.3 an der seitlichen Begrenzung 26 der Ausnehmung 25 und bei der Einhand-Relieftastatur 2.4 in vertikaler oder schräger Anordnung am seitlichen Ende dieser Tastatur (vgl. Fig. 8.5). Der Zwischenteil 18.3 der Relieftastaturen 2.3, 2.4 kann durch Verschieben der beiden Teile 18.1 und 18.2 auf einer Schiene 27 vergrößert oder verkleinert, gegebenenfalls auch eliminiert werden; bei der Relieftastatur 2.3 für jede der beiden Hände 16 separat und unabhängig voneinander (hier nicht dargestellt). Durch die Möglichkeit, die Länge des Zwischenteils 18.3 variieren zu können, lassen sich die Relieftastaturen 2.3, 2.4 optimal an die Längen der Hände des Anwenders anpassen. Wurde auf diese Weise der günstigste Abstand gefünden, so wird er mit einem Fixiermechanismus 27' fixiert. Der so entstandene Raum des Zwischenteils 18.3 wird mit einem aushärtendem Material 28 ausgegossen und damit gefüllt. Die Gießform berücksichtigt die Gestalt der Innenhand des Anwenders mit (sie wird mitgeformt), sodaß Teile der Oberfläche 20, 21 der Tastatur den Händen des Anwenders genau angepaßt werden.

Fig. 8.4 zeigt dieselben Relieftastaturen 2.3,2.4 (vgl.Fig 8.3) über denen sich ein Gehäuse 30 in beliebiger Ausführung befindet. Auf der Innenseite des Gehäuses 30, wie auch an beliebigen anderen Stellen oberhalb und unterhalb der Finger, Hände, Arme usw., befinden sich diverse Vorrichtungen 31, wie beispielsweise Hebel 31.1, Schieber, Druckknöpfe, usw., die auch Sensoren 1.4 sein können und die mittels Finger-, Hand- oder Armbewegung nach unten oder oben aktiviert und angeschlagen werden können (auch oberhalb des Daumens; hier nicht dargestellt).

Fig. 8.5 zeigt Details der Relieftastaturen 2.3,2.4 von vorne und im Schnitt und veranschaulicht deren Vorrichtung zum Höhen- und Breitenverstellen der Tasteneinheit 5.1,5.2. Mittels einer Verstellschraube 32 oder einem beliebigen anderen derartigen Mechanismus wird die Höhe 33 und der Tastenabstand 34 der Hand des Anwenders genau angepaßt. Entstehen beim Festlegen des Tastenabstandes 34 Lücken oder Engen, so können diese durch Einsatz einer Kleineren oder größeren Tasteneinheit 5.1, 5.2 gefüllt werden.

Fig. 8.6 und Fig. 8.7 zeigen Ausführungen einer Relieftastatur 2.3, 2.4, die keine zusätzliche Auflagefläche benötigt, da sie über eine Schiene 35 oder eine beliebige andere derartige Vorrichtung verfügt, die an den Armen des Anwenders fixiert werden kann. Diese Ausführungen eignen sich insbesondere als Einhandtastaturen 2.4 für den mobilen Einsatz. Fig. 8.8 zeigt eine andere derartige Ausführung der Relieftastatur 2.3, 2.4 (vgl. Fig. 8.6 und Fig. 8.7), die mit einer Computer-Maus 36 kombiniert ist.

Fig. 8.9 zeigt die Daumentastatur 29, die sich in der Beidhand-Relieftastatur 2.3 an der seitlichen Begrenzung 26 der Ausnehmung 25 und bei der Einhand-Relieftastatur 2.4 in vertikaler oder schräger Anordnung am seitlichen Ende dieser Tastatur (vgl. Fig. 8.5) befindet. In flachen Ausführungen von Tastaturen 2 ist die Daumentastatur 29 den jeweils gegebenen Anforderungen angepaßt. Die Daumenrastatur 29 verfügt über mehrere Einzeltasten 37, 38, 39, 40, 41, 42, 43, 44 bei denen es sich um einfache Auslöseeinheiten 1,4 um Tasteneinheiten 5.1,.2 und um beliebige andere Vorrichtungen 31 (z.B. auch Hebel 31.1 oder Schieber) handeln kann, die an allen beliebigen, mit den Daumen erreichbaren Stellen der Tastatur 2, so auch oberhalb des Daumens 30 (vgl. Fig. 8.4), angebracht sein können. Auch die Daumentastatur kann über das Funktionsprinzip der Akkordtastatur 2.2 verfügen. Das Beispiel gemaß Fig. 8.9 sieht vor, daß die Leer-, Umschalt- und Löschfunktion durch die Taste 37 erfüllt wird: der einfache Tastendrück bewirkt einen Leerschritt, der beim Abheben des Fingers vollzogen wird; wird die Einzeltaste 37 beim Aktivieren (Anschlagen) einer anderen Taste festgehalten, so erfüllt sie die Umschaltfunktion, wie sie bei der QWERTZ-Tastatur 9 üblich ist; wird die Einzeltaste 37 mit einer bestimmten Minimalhärte einmal kurz angeschlagen (hard-punch), so erfüllt die Einzeltaste 37 eine Löschfunktion (das zuletzt eingegebene Zeichen oder das unvollständig eingegebene Wort werden gelöscht). Die Einzeltasten 38 und 39 dienen zum Anwählen von (weiteren) Tastaturebenen. Die Einzeltaste 40 dient der Zeilenschaltung, die Einzeltaste 41 als Tabulatortaste (normaler Tastendruck) und als Bach-Space-Taste (hard-punch). Die Einzeltaste 42 dient zum Außerkraftsetzen der Funktionsautomatik der Tastatur 2, sodaß mit ihr auch außergewöhnliche Anschläge oder Befehle ausgeführt werden können. Die Einzeltaste 43 dient als Fixier- oder Einrasttaste ähnlich der Shift-Lock-Taste der QWERTZ-Tastatur 9; die Einzeltaste 44 als Reserve und vom Anwender frei belegbare Funktionstaste.

Fig. 9.1 zeigt die Struktur der Brailleschrift in ihren üblichen Variationen. Die Braillestruktur 45.1 weist acht Braillepunkte P1, P2, P3, P4, P5, P6, P7, P8 auf, die matrixmäßig in vier Reihen R1,R2,R3,R4 und zwei Kolonnnen Ka,Kb angeordnet sind. Mit acht Braillepunkten können 256 verschiedene Braillezeichen dargestellt werden. Mitunter kommt es auch zum Einsatz einer aus 7 Punkten bestehenden Braillestruktur bei der entweder der Braillepunkt P8 oder P7 fehlt. Die Braillestrurtur 45.2 besitzt sechs Braillepunkte P1, P2, P3, P4, P5, P6 und somit drei Reihen R1, R2, R3 und zwei Kolonnen Ka, Kb. Mit sechs Braillepunkten können insgesamt 64 verschiedene Braillezeichen dargestellt werden. In Ausnahmefällen kommt auch eine aus 5 Punkten bestehende Braillestruktur in Frage. Die Braillestruktur 45.3 besitzt vier Braillepunkte P1, P2, P4, P5 die somit zwei Reihen R1, R2 und zwei Kolonnen Ka, Kb aufweist. Mit vier Braillepunkten können insgesamt 16 verschiedene Braillezeichen dargestellt werden. Sie dient insbesondere zum Darstellen von Ziffern, die keine größere Anzähl von Braillepunkten benötigen.

Fig. 9.2 zeigt die Anordnung der Brailletasten bei einer konventionellen, beidhändig zu bedienenden Brailletastatur 46. Für jeden Braillepunkt P1, P2, P3, P4, P5, P6, P7, P8 ist eine separate Taste vorgesehen. Abweichend von der Braillestruktur 45.1 sind die Kolonnen Ka und Kb getrennt und horizontal angeordnet. Die Tasten werden im Akkordanschlag angeschlagen, wobei der Anschlag beim Abheben der Finger von den Tasten erfolgt.

Fig. 9.3 und Fig. 9.4 zeigen die erfindungsgemäße Tasten- bzw. Anschlagsanordnung für eine Einhand-Brailletastatur für Linkshänder 47.1 und Rechtshänder 47.2. Zwischen den Kolonnen Ka und Kb befinden sich zusätzliche Kolonnen Kc. Für die Braillepunkte P1, P2, P3, P4, P5, P6, P7, P8 und die Punktpaare P1+4, P2+5, P3-6, P7+8 gibt es demnach zwölf Einzeltasten 3 bei der 8-Punkt-Braillestruktur 45.1 (bei anderen Braillestrukturen entsprechend weniger oder mehr). Anstelle der Einzeltasten 3 können aber auch vier Mehrwegtasten 7 bei der 8-Punkt-Braillestruktur 45-1 (bei anderen Braillestrukturen entsprechend weniger oder mehr) zum Einsatz gelangen, wobei eine Mehrwegtaste 7 jeweils eine Reihe R1, R2, R3, R4 und in dieser zwei Einzelpunkte und ein Punktepaar (P1, P4, P1+P4), (P2, P5, P2+P5), (P3, P6, P3+P6, (P4, P8, P4+P8) abdeckt. Die Braillepunkte P1, P2, P3, P4, P5, P6, P7, P8 können zu beliebigen Punktpaaren kombiniert werden, doch muß jede einzelne Reihe Rn die Anschläge Pn1, Pn2 und Pn1+Pn2 vorsehen. Auch das Anschlagprinzip der Akkordtastatur 2.2 kann bei der Einhand-Brailletastatur zum Einsatz gelangen.

## Patentansprüche

1. Tastatur mit mindestens einer Taste (3) und einer Auslöseeinheit (4), die mit der Taste (3) verbunden ist, **dadurch gekennzeichnet**, daß auf der Taste (3) mindestens zwei Sensoren (1) vorgesehen sind, um mit der Taste (3) unterschiedliche Signale erzeugen zu können, wobei die Sensoren (1) mit einer Anzeigevorrichtung für die zu erzeugenden Signale versehen sind und wobei das Ansprechverhalten der Sensoren unterschiedlich zu dem der Auslöseeinheit (4) ist, um vor dem endgültigen Auslösen des Signales eine Anzeige des Signales bewirken zu können.

2. Tastatur nach Anspruch 1, **dadurch gekennzeichnet**, daß die Sensoren (1) und die Auslöseeinheit (4) unterschiedlich starke Betätigungsdrücke aufweisen, oder daß die Sensoren (1) und die Auslöseeinheit (4) auf unterschiedliche Betätigungsgeschwindigkeiten, unterschiedliche Betätigungsrichtungen oder auf unterschiedliche Verweildauer bei der Betätigung ausgelegt sind.

3. Tastatur nach einem der Ansprüche 1 oder 2, **dadurch gekennzeichnet**, daß die Auslöseeinheit (4) aufdie Abgabe eines Impulses am Ende der Betätigung der Taste (3) ausgelegt ist.

4. Tastatur nach einem der Ansprüche 1 bis 3, **dadurch gekennzeichnet**, daß ein Anschluß für einen Bildschirm vorgesehen ist, auf dem das Zeichen darstellbar ist, das der vom Benutzer berührten Taste (3) entspricht, wobei vorzugsweise eine Einblendung dieses Zeichens in ein Bildschirmfenster erfolgt.

5. Tastatur nach einem der Ansprüche 1 bis 4, **dadurch gekennzeichnet**, daß eine akustische Anzeigeeinrichtung für das Zeichen vorgesehen ist, das der vom Benützer berührten Taste (3) zugeordnet ist.

6. Tastatur nach einem der Ansprüche 1 bis 5, **dadurch gekennzeichnet**, daß ein Speicher für Textbausteine, Abkürzungen oder dergleichen vorgesehen ist, der bei Betätigung des Sensors (1) einer Taste (3) verschiedene diesen Tasten (3) zugeordnete Textbausteine zur Anzeige bringt, welche dann durch Betätigung einer weiteren Taste auswählbar sind.

7. Vorrichtung nach einem der Ansprüche 1 bis 6, **dadurch gekennzeichnet**, daß die Auslöseeinheit (4) in Abhängigkeit vom Druck oder der Geschwindigkeit der Betätigung unterschiedliche Signale abgeben kann.

8. Tastatur nach einem der Ansprüche 1 bis 7, **dadurch gekennzeichnet**, daß zur Erzeugung vom Braillezeichen der Achtpunktbraillestruktur zwölf Tasten vorgesehen sind, wovon acht für die Erzeugung von Einzelpunkten und vier für die Erzeugung von Punktpaaren vorgesehen sind.

9. Tastatur nach Anspruch 8, **dadurch gekennzeichnet**, daß die zwölf Tasten in vier Reihen angeordnet sind, wobei in jeder Reihe zwei Tasten für die Erzeugung von je einem Einzelpunkt sowie eine weitere Taste für die Erzeugung eines aus diesen Punkten zusammengesetzten Punktpaares angeordnet sind.

10. Vorrichtung nach Anspruch 9, **dadurch gekennzeichnet**, daß vier Tasten mit drei Betätigungsmöglichkeiten vorgesehen sind.

11. Tastatur nach einem der Ansprüche 8 bis 10, **dadurch gekennzeichnet**, daß zur Erzeugung einer Sechspunktbrailleschrift lediglich neun Tasten beziehungsweise drei Reihen vorgesehen sind.

## Claims

1. Keyboard having at least one key (3) and a trigger unit (4) which is connected to the key (3), characterised in that at least two sensors (1) are provided on the key (3) in order that different signals may be produced with the key (3), wherein the sensors (1) are provided with an indicating or display device for the signals which are to be produced, and wherein the response characteristic of the sensors differs from that of the trigger unit (4) in order that a display of the signal may be effected before the signal is finally triggered.

2. Keyboard according to claim 1, characterised in that the sensors (1) and the trigger unit (4) are actuated by differing amounts of actuating pressure, or in that the sensors (1) and the trigger unit (4) are designed for different actuating speeds, different actuating directions, or for different periods of dwell in the case of actuation.

3. Keyboard according to one of the claims 1 or 2, characterised in that the trigger unit (4) is designed to emit a pulse after the actuation of the key (3).

4. Keyboard according to one of the claims 1 to 3, characterised in that a connection is provided for a screen on which the symbol corresponding to the key (3) touched by the user can be represented, with this symbol preferably being inserted into a screen window.

5. Keyboard according to one of the claims 1 to 4, characterised in that an acoustic indication facility is provided for the symbol allocated to the key (3) touched by the user.

6. Keyboard according to one of the claims 1 to 5, characterised in that a memory for text modules, abbreviations or suchlike is provided, which memory displays, in the event of the actuation of the sensor (1) of a key (3), various text modules allocated to these keys (3), which standard texts may then be selected by actuating a further key.

7. Device according to one of the claims 1 to 6, characterised in that the trigger unit (4) can emit different signals, subject to the pressure or the speed of actuation.

8. Keyboard according to one of the claims 1 to 7, characterised in that twelve keys are provided for the production of the braille symbol of the eight dot braille structure, of which twelve keys eight are provided for the production of single dots and four for the production of pairs of dots.

9. Keyboard according to claim 8, characterised in that the twelve keys are arranged in four rows, wherein in each row two keys are arranged to each produce a single dot, and a further key is also arranged to produce a pair of dots made up of these single dots.

10. Device according to claim 9, characterised in that four keys having three possibilities of actuation are provided.

11. Keyboard according to one of the claims 8 to 10, characterised in that merely nine keys, or three rows, are provided for the production of six dot braille.

## Revendications

1. Clavier comprenant au moins une touche (3) et une unité de déclenchement (4) qui est reliée à la touche (3), caractérisé par le fait qu'au moins deux capteurs (1) sont prévus sur la touche (3), afin de pouvoir engendrer des signaux différents au moyen de la touche (3), cependant que les capteurs (1) sont pourvus d'un dispositif d'affichage des signaux à engendrer, et que le comportement des capteurs en réponse est différent de celui de l'unité de déclenchement (4), afin de pouvoir produire un affichage des signaux avant le déclenchement définitif du signal.

2. Clavier selon la revendication 1, caractérisé par le fait que les capteurs (1) et l'unité de déclenchement (4) présentent des pressions d'actionnement dont l'intensité est différente, ou par le fait que les capteurs (1) et l'unité de déclenchement (4) sont conçus pour des vitesses d'actionnement différentes, pour des directions d'actionnement différentes ou pour des durées de contact différentes lors de l'actionnement.

3. Clavier selon l'une des revendications 1 et 2, caractérisé par le fait que l'unité de déclenchement (4) est conçue pour émettre une impulsion à la fin de l'actionnement de la touche (3).

4. Clavier selon l'une des revendications 1 à 3, caractérisé par le fait qu'il est prévu un raccordement à un moniteur sur lequel peut être représenté le signe correspondant à la touche (3) qui est touchée par l'utilisateur, cependant qu'une surimpression de ce signe a lieu de préférence sur un écran.

5. Clavier selon l'une des revendications 1 à 4, caractérisé par le fait qu'il est prévu un dispositif indicateur acoustique pour le signe associé à la touche (3) qui est touchée par l'utilisateur.

6. Clavier selon l'une des revendications 1 à 5, caractérisé par le fait qu'il est prévu une mémoire qui est destinée à des éléments de texte, à des abréviations ou similaires et qui, lors de l'actionnement du capteur (1) d'une touche (3), entraîne l'affichage de divers éléments de texte qui sont associés à ces touches (3) et qui peuvent être ensuite choisis par actionnement d'une autre touche.

7. Clavier selon l'une des revendications 1 à 6, caractérisé par le fait que l'unité de déclenchement (4) peut émettre des signaux différents en fonction de la pression ou de la vitesse de l'actionnement.

8. Clavier selon l'une des revendications 1 à 7, caractérisé par le fait qu'en vue d'engendrer des signes braille de la structure braille à huit points, il est prévu douze touches parmi lesquelles huit sont prévues pour engendrer des points individuels et quatre sont prévues pour engendrer des paires de points.

9. Clavier selon la revendication 8, caractérisé par le fait que les douze touches sont disposées selon quatre rangées, cependant que, dans chaque rangée, deux touches sont prévues pour engendrer chacune un point individuel et une autre touche est prévue pour engendrer une paire de points constituée par ces points.

10. Clavier selon la revendication 9, caractérisé par le fait qu'il est prévu quatre touches pourvues de trois possibilités d'actionnement.

11. Clavier selon l'une des revendications 8 à 10, caractérisé par le fait qu'il est prévu seulement neuf touches ou trois rangées, respectivement, pour engendrer une écriture braille à six points.
